# EUROPEAN PATENT APPLICATION

(11) **EP 4 697 644 A1**
(43) Date of publication of application: **18.02.2026**
(21) Application number: 24194900.7
(22) Date of filing: 16.08.2024
(51) Int. Cl.: H04L 9/32

(54) **COMPUTER-IMPLEMENTED METHOD AND SYSTEM**

(71) Applicant: NXP B.V., 5656 AG Eindhoven (NL)
(72) Inventor: BAUMANN, Christoph, Gratkorn (AT); AZOUAOUI, Melissa, 22529 Hamburg (DE)
(74) Representative: Colaiuda, Antonella

(57) **Abstract**

A method and system are provided wherein an attestation of data on a device can be provided reliably whilst mitigating the risk of side channel attacks and interruption events.

## Description

### FIELD

The invention relates to a method and system. Particularly, but not exclusively, the invention relates to a computer-implemented method and system. Further particularly, but not exclusively, the invention relates to a computer-implemented method of providing an attestation of data on a device.

### BACKGROUND

Advances in quantum computing have necessitated the need for the development of technology which can enable computers to defend themselves against attacks from quantum computers. This has accelerated the development of post-quantum cryptography (PQC).

Attestation of data which is held on a device is often requested of a device to demonstrate to entities external to that device that information on the device is genuine.

Unfortunately, devices are often confined to limited resources in terms of processing capacity, storage and memory. This conflicts with the need for more complex schemes for mitigating against attacks from quantum computers.

Aspects and embodiments were conceived with the foregoing in mind.

### SUMMARY

Aspects relate to the attestation of data on a device. Data on a device which is subject of an attestation request may relate to the identification of the device or a public key on an external entity which has been provided to the device in a trusted relationship.

Viewed from a first aspect, there is provided a computer-implemented method of providing an attestation of data on a device. An attestation provides proof of the existence of the data on the device and particularly provides proof, by cryptographic means, to an external party that information on the device (e.g. identity, identifiers, public and private keys, serial numbers, configuration settings and hash values) are genuine or as expected. The device may be a computing device. The computing device may comprise a processing resource and a secure computing resource which can execute operations related to signature generation and attestation of data. The method may be implemented on the computing device. The computing device may be a mobile computing device. The computing device may be an embedded computing device which is configured to execute a task or a plurality of tasks. The computing device may comprise a sensor which may be an internet-of-things (IoT) device. The data may comprise at least one of: a device identifier, public and private keys, a serial number associated with the device, configuration data, and a hash value.

The method may comprise initialising a signature generation structure for generation of signatures, wherein initialising the signature generation structure comprises generating a first signature tree and immediately, responsive to the generation of the first signature tree, and generating a second signature tree. The signature trees may comprise a plurality of layers up to a height parameter. The signature tree may comprise a bottommost layer of secret keys (which may be separated into secret key chunks) which are hashed to create a layer of public keys which are then successively hashed to form a next layer, where a next layer and subsequent layers are formed by successive hashing and concatenation of a previous layer until a signature tree of height h is reached. The number of secret keys which form the basis of the signature tree is limited by a parameter which may be set by the computing device. For example, it may be limited (for a signature tree of heigh h) to signatures generated using 2^h secret keys. The secret keys may be used to form the basis of the signature generated by the signature tree. The number of secret keys may be set based on the height h of the tree. Each signature tree may be configured to generate the same number of signatures. Each signature tree may be configured to generate a distinct number of signatures.

The method may comprise generating a first signature tree public key. This may be by successive hashing and concatenation of layers of keys which are initialised by secret chunks.

The method may further comprise signing the first signature tree public key with a signature generated using a private key associated with the device. The device private key may be based on a recovery tree which is configured and set up similarly to the first and second signature trees.

The method may further comprise generating a second signature tree public key. This may also be generated by successive hashing and concatenation of layers of keys which are initialised by secret chunks. The second signature tree public key is distinct from the first signature tree public key. Successive signature trees may be signed using signatures based on a previous signature tree.

The method may further comprise signing the second signature tree public key with a private key obtained using the first signature tree. The private key may be based on secret key chunks which are generated using random numbers as the initial layer in the first signature tree.

The method may further comprise receiving a request for attestation of data on a device, wherein the request is received from a requesting entity. The requesting entity may form part of an external network (external to the computing device). The data may relate to the device and its state. For example, it could be that the data is only stored on a secure computing element on the device or it could include data which is on the device itself. The request for attestation is to ensure that the device is genuine and that it is not compromised and running in a correct state and that the attestation has been generated by the device, or by a secure element on the device.

The method may further comprise obtaining the data to be attested to. The data may be stored in storage which is part of a secure computing element on the computing device.

The method may further comprise using the signature generation structure to generate a signature, wherein the signature is based on one of the first signature tree or the second signature tree.

The first signature tree may be selected to generate the signature prior to an interruption event and the second signature tree is selected to generate the signature responsive to the detection of an interruption event. An interruption event may be an event which, for example, may comprise a loss of power to the computing device or an interruption to device functionality.

The method may comprise generating the attestation by signing the data with the selected signature. The attestation may be generated by hashing the data and by assigning secret key chunks to part of the hash of the data and then generating a successive hash or series of hashes of the secret key chunks. The attestation may then comprise concatenating the hash values of the secret key chunks. The attestation may only be based on part of the data, where part of the data means not all of the data. The attestation may also comprise a checksum.

The method may comprise providing the attestation to the requesting entity. This may comprise transmitting the attestation, which may comprise a hash of the data and the signature, which includes the respective concatenation of the hash values of the secret key chunks and an authentication path, to the requesting entity.

A method in accordance with the first aspect enables an attestation to be reliably provided even in the event of an interruption. The attestation can still be authenticated using the link between the first and second signature trees which is enabled by the signature of the second signature tree based on the first signature tree.

That is to say, successive signature trees may be generated and used to support an attestation of data on a device. Each of the successive signature trees comprise a plurality of layers starting with secret key chunks, moving up to public key chunks associated with the secret key chunks and then successive layers which are based on the hashes of the layers below.

Optionally, the second signature tree may be immediately generated responsive to the generation of the first signature tree. The technical effect of this is that signatures are always available, even if an interruption event occurs before the first signature tree expires.

Optionally, the device public key may be shared with an external entity. This enables a trusted relationship to be established with an external entity, which may be the requesting entity.

The first signature tree and the second signature tree may both be restricted to the generation of a finite number of signatures. The number of signatures may be based on a height parameter of the respective signature tree. The height parameter may be set to be a small number so that a signature tree is not used as the basis for signature generation for too long. This minimises the computational resources used for signature generation, authentication and also enables long signature chains to be built even with smaller signature trees.

Each private or secret key may only be used once to generate a signature. This provides protection against side channel attacks which can be built on the same private keys being used for successive signature generations.

Optionally, after expiry of the first signature tree, a third signature tree may be generated. It may be generated immediately following the generation of the second signature tree in that it is generated immediately following resource allocation and identification for the second signature tree. A third signature tree public key may then be generated and then signed using the second signature tree. Attestations can then be generated using the third signature tree, especially if an interruption event occurs during signature generation using the second signature tree.

Successive generation of signature trees may follow responsive to interruption events or if the number of signatures which can be generated using a signature tree has been reached.

Optionally, prior to the generation of the signature generation structure, a recovery generation structure comprising a recovery generation tree comprising a plurality of recovery private keys may be generated. Responsive to the determination of the occurrence of a recovery event, the recovery generation structure may be used to generate a further signature tree and an associated public-key. The associated public key can then be signed using a signature generated using a recovery private key obtained from the recovery generation tree. Examples of a recovery event may include loss of data by the device or network; loss of data associated with a respective signature tree; or the estimated time of verification exceeding a verification threshold. The verification threshold may be a time which is set for an acceptable verification of an attestation provided by the device. This may be if the number of nodes on the signature tree which are provided as the authentication path exceeds a specific number. This may be determined in real-time, i.e. in response to increased demand on network resources.

Optionally, a trust chain may be initialised between respective signature trees and the attestation; and the trust chain is transmitted to a blockchain for publication and wherein the trust chain may be associated with a blockchain. The blockchain may comprise a plurality of blockchain transactions. The blockchain transactions may be verified and validated using a protocol based on a consensus based blockchain. Each blockchain transaction may comprise data associated with a corresponding signature tree or associated with a device public or private key or a restoration key. The data may comprise a hash of the data associated with the corresponding device, key or signature tree.

Optionally, the attestation of the data may comprise determining a hash of the data.

Aspects may also provide a computer-program product which, when executed on a processing medium, configures the processing medium to implement the steps of the first aspect.

Aspects may also provide a non-transitory storage medium configured to store instructions which, when executed by suitably configured hardware, provides instructions to a processing medium to implement the steps of the first aspect.

### DESCRIPTION

An embodiment is now described by way of example only and with reference to the following drawings in which:
Figure 1 illustrates a method by which a device can respond to a request for attestation of data;
Figure 2 schematically illustrates a device configured to respond to a request for attestation of data in accordance with the embodiment;
Figure 3 schematically illustrates a signature generation structure which can be used in accordance with the embodiment;
Figure 4 schematically illustrates a tree structure which can be used in a method in accordance with the embodiment; and
Figure 5 schematically illustrates a flow of steps which can be used to generate an attestation;
Figure 6 illustrates a flow of steps which can be used in responsive to a recovery event;
Figure 7 illustrates trust provisioning steps which can take place to establish a trusted relationship with a network;
Figure 8 illustrates the initialisation of a blockchain corresponding to a signature tree; and
Figure 9 illustrates a blockchain which can be used to verify an attestation.

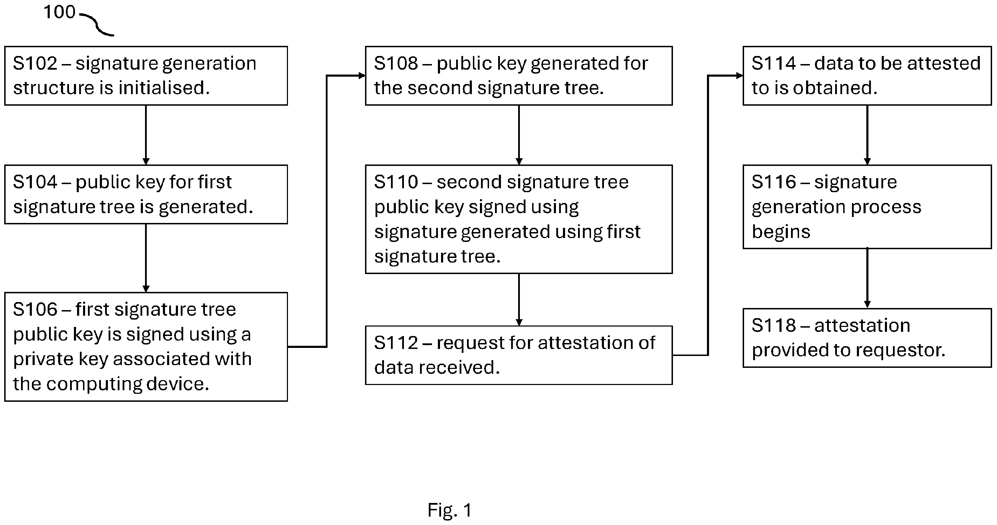

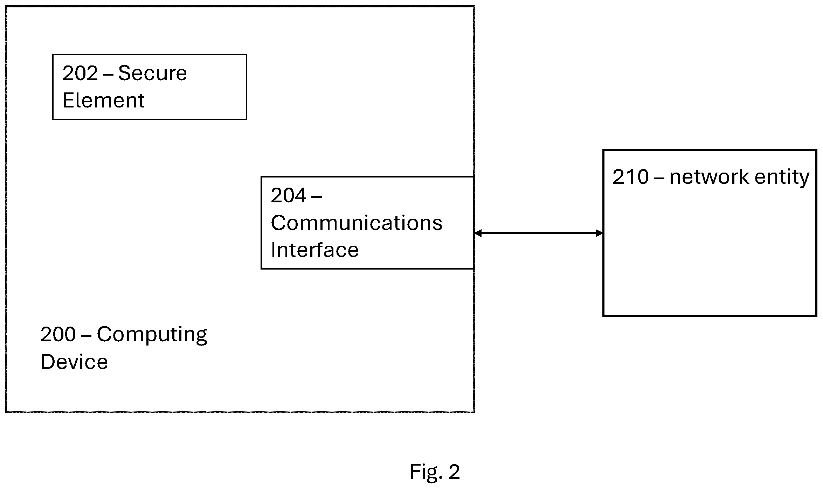

We will now describe, with reference to Figures 1 to 3, a method 100 of providing an attestation of data on a device.

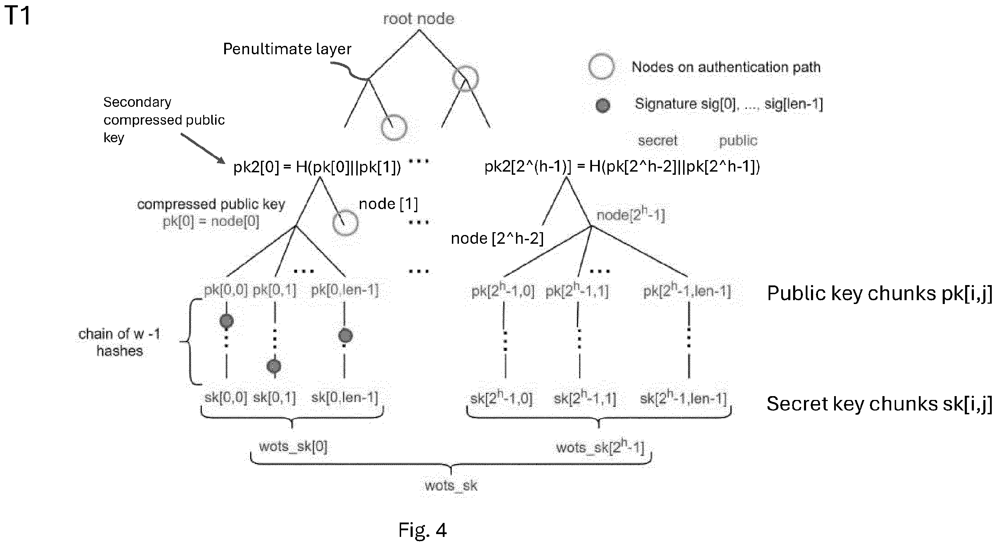

In a step S102, a signature generation structure (T) is initialised. The initialisation of the signature generation structure comprises generating a first signature tree (T1) and, immediately following the generation of the first signature tree, a second signature tree (T2) is also generated. The immediate generation of T2 following the generation of T1 generally means that as soon as the hardware resources for T1 are allocated and identified, the hardware resources for T2 are then allocated and identified. Similarly, as discussed below, further signature trees are generated immediately following the generation of the previous signature tree and before starting to use the previous signature tree. That is to say, for example, second signature tree T2 may be generated before we start to use the first signature tree T1 such that the public key of the second signature tree can be signed with the first secret key of the first signature tree. In less security aware applications, the generation of signature tree T2 may follow the generation of signature tree T1 over a longer period, i.e. the generation of T2 may not be immediate in the sense that it may follow seconds or minutes after the hardware resources for T1 are allocated and identified, rather than immediately following the allocation and identification of resources corresponding to the previous signature tree. The signature generation structure T is initialised using the secure element 202 on computing device 200 in that the secure element 202 allocates hardware resources to the signature trees T1 and T2. The structure of first and second signature trees (T1 and T2) is described with reference to Figure 4.

In a step S104, first signature tree public key (PubK_T1) is generated for the first signature tree (T1). This is described below with reference to Figure 4 where the first signature tree public key is generated by successive hashing and concatenation to form the root of the first signature tree T1.

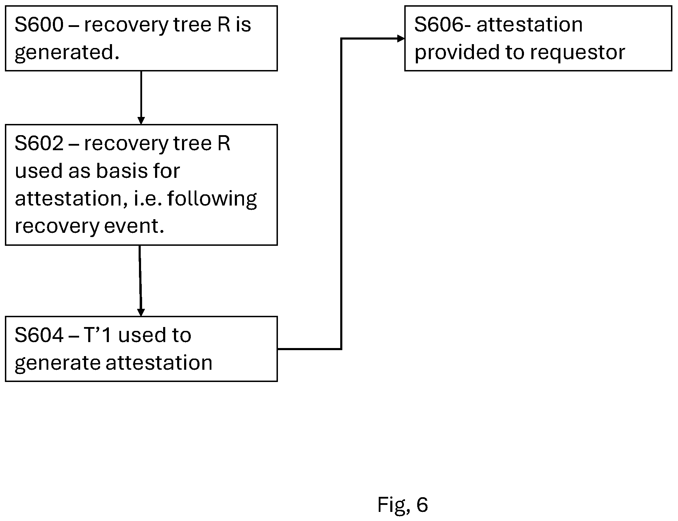

In a step S106, the first signature tree public key (PubK_T1) is signed with a cryptographic signature generated using a private key corresponding to the computing device 200 (PriK_Dev). This private key may be the private key which is next available from recovery tree R described below with reference to Figure 6. This private key may also be a different private key set by the manufacturer during manufacturer of the device. The device private key (PriK_Dev) may be used, as described later, in the establishment of a trusted relationship between the computing device 200 and a network.

In a step S108, public (PubK_T2) is generated for the second signature tree (T2). This is described below with reference to Figure 4 where the second signature tree public key is generated by successive hashing and concatenation to form the root of the second signature tree T2.

The second signature tree public key (PubK_T2) is then signed using a signature generated using the next available private key in T1. This is step S110. This ensures that, during an interruption event (as described below), the next signature tree can always be signed and the same private key does not need to be used for signature generation in the attestation process. This protects the signature generation process against side-channel leakage.

The computing device 200 is configured to receive a request from an external entity for an attestation of data on the device. An example entity may be network entity 210 which could be another computing device which is configured to issue attestation requests to the computing device 200 . The computing device 200 may receive the request for attestation if it wants to communicate with a network using the network entity 210 and it is requested to prove the device is not a malicious actor. In one example, this could be where the device is an Internet-of-Things (IoT) device which desires to communicate with the network and the network requires proof, in the form of attestation of data, that the device is genuine and not a malicious actor. The request for attestation is received in a step S112 at a communications interface 204 of the computing device 200.

The request for attestation may comprise a data item which is to be attested to by the computing device 200 in response to the request. An example of such a data item may comprise information stored on the device such as, for example, a device identifier, a serial number, public keys (e.g. a device public key or public key which has been shared with the device), a configuration setting, a value of some state register or a hash value corresponding to hash of a piece of code running on the device. The data item may also be some alphanumeric sequence such as a name or other identifier. The request for attestation may be "empty" as the request may only be for an attestation of data which is present in the secure element 202 on the computing device 200. In this instance, the empty data may be represented by a nominal identifier such as "zero" or the word "empty".

Attestation may, for example, relate to a functionality on the computing device 200 which enables it to prove, by cryptographic means, to an external party (such as an external network entity 210 that information on the device (e.g. identity and identifiers, public and private keys, serial numbers, configuration settings and hash values) are genuine or as expected. Attestation may also be extended to information sources which are connected via a trusted protected connection to the secure device (e.g. host controller, bootloader, peripheral device).

The data item generally relates to the device and the state of the device (i.e. is it running as expected and has not been compromised). The data item could be data that is only stored on the secure element 202 or it could include data which is on the host computing device 200. The attestation provides assurance that the device is genuine and that it has not been compromised by, say, a malicious party or malicious software, and that the signature in the attestation has been generated by the secure element 202. The data (which is subject of the attestation request) may include device identifiers or the secure element 202 and/or the computing device 200. The data may also include hashes of computer program code running on the device, state register values or other data which is placed on the device during manufacturing or trust provisioning. The data which is used may be determined by the user or manufacturer.

On receiving the request at the communications interface 204, the request is processed to determine which data item is to be attested to. This enables the computing device 200 to obtain and determine which data item is to be subject of the attestation. This is step S114.

The processing of the request determines which device identifier and device content (i.e. which data item stored on the device, e.g. public key) are to be attested to as a result of receiving the request. A request can then be provided to the secure element 202 for the attestation to be provided. The signature generation structure T and the process it follows to generate an attestation will now be described.

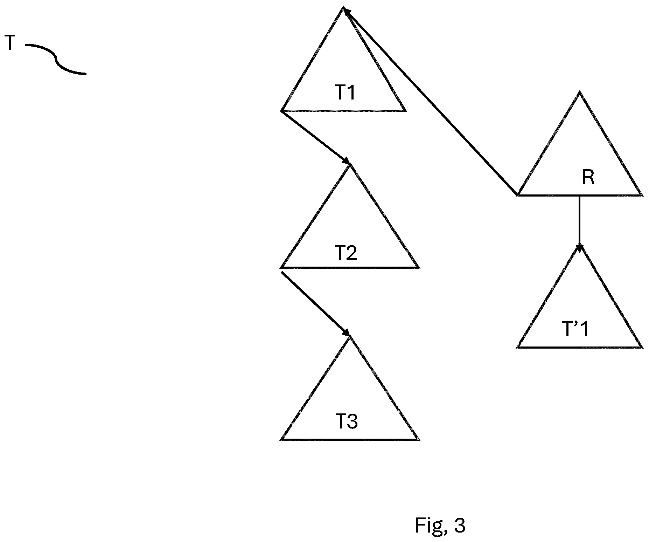

In a step S116, the secure element 202 begins the signature generation process using a signature generation structure comprising a plurality of signature generation trees, which we will now describe by way of reference to the signature trees illustrated in Figures 3 and 4.

In Figure 3, we schematically illustrate the relationship between a plurality of signature trees (T1, T2 and T3) and a recovery tree R. Recovery tree R will be described later.

Each of T1, T2 and T3 is a hash based signature tree structure which is an example of a signature tree structure which can be used to generate signatures as part of method 100. A schematic illustration of such a hash based signature tree structure is provided in Figure 4. Each of T1, T2 and T3 are structured similarly and will be referenced afterwards. Signature generation using T1, T2 and T3 follows the same series of steps, starting with different secret key values.

Recovery tree R and the first recovery signature tree T'1 are discussed below with regard to recovering signature generation functionality after a recovery event.

The bottommost layer in the signature tree structure comprises a plurality of secret key chunks sk[i,j] which are each paired with a corresponding public key. The secret key chunks are chunks of a secret key wots_sk[i] (which may also be called a private key). That is to say, each signature tree structure has 2^h secret keys.

Regarding the correspondence between the secret key chunks and the public key, the secret key chunk sk[0,0] is paired with public key pk[0,0], the secret key chunk sk[0,1] paired with public key pk[0,1] and so on and so forth. The secret key chunks are generated using suitable random number generators as recommended for use in, for example, Leighton-Micali Signature (LMS) or Extended Merkle Signature scheme approaches to signature tree structures (as suggested in standard NIST-SP 800-208). The secret key chunks are combined to form the one-time signature secret key, i.e. wots_sk[0] is formed from the combination of sk[0,0], sk[0,1],...,sk[0, L-1], where L = len referred to in the figures. This combination of the secret key chunks to form the one time signature secret key may be formed, for example, by concatenation of the values of sk[i,j]. The one-time signature secret key may be described as a private key.

The public key corresponding to a secret key chunk is generated by hashing the corresponding secret key chunk w-1 times. The parameter w may be set by the specification of the trusted relationship with the network entity 210 or the manufacturer of the secure element 202 or the computing device 200. An example hash function may be SHA256. Other example hash functions may be SHA256/192, SHAKE256/256 or SHAKE256/192. The hashing of the secret key chunk sk[i,j] to create the corresponding public key pk[i,j] enables a cryptographic pair to be formed between the secret key chunk and the corresponding compressed public key.

For example, the compressed public key at node[0], i.e. pk[0] = node[0], is then formed by hashing a concatenation of each of pk[0,0]...pk[0,L-1] e.g. H (pk[0,0] ∥ pk[0,1] ∥ ... ∥ pk [0,L-1]) wherein H() is the corresponding hash function.. This is consistent with what is set out in the Guidance around NIST SP 800-208.

Compressed public keys at corresponding nodes of the 2^h nodes are then formed by corresponding concatenations of each of pk[i,j] where i ranges from 0 to 2^h-1 and j ranges from 0 to L-1. That is to say, the compressed public key at node[2^h-1] is formed from H (pk[2^h-1,0] ∥ pk[2^h-1,1] ∥ ... ∥ pk [2^h-1,L-1]) where x ∥ y denotes a concatenation of x and y. That is to say, the compressed public key (node[2^h-1]) corresponding to node [2^h-1] is formed by obtaining a hash of the concatenation of pk[2^h-1,0], [2^h-1, 1],...,pk[2^h-1, L-1].

Moving up the signature tree public key to secondary compressed public key, i.e. pk2[k], where k is from zero to h, this is formed by a hash of a concatenation of the keys at the previous layer, i.e. pk[0] (= node[0]) and pk[1] (= node[1]) and the final node pk2[2^(h-1)] is formed from a hash of a concatenation of pk[2^h-2] and pk[2^h-1]. The public key at node [1], i.e. pk[1], can then form part of the authentication path for any signatures generated using wots_sk[0] and this is the same for subsequent layers of the signature tree. Other nodes which would on the authentication path are shown in Figure 4. The public keys at these nodes, i.e. public keys formed from hashing the nodes at the previous layer as illustrated previously, can then be used to verify the signature provided in an attestation based on whichever of the wots_sk is being used at the time as the basis for a signature.

Lastly, to form the public key corresponding to the signature tree, the public keys at the penultimate layer (which are in turn formed by hashing a concatenation of the hash values at the previous layer) are concatenated and then hashed to form the root node, which is equal to the public key of the respective signature tree.

Intervening layers are similarly formed by hashing the concatenation of the keys forming the preceding layer.

That is to say, PubK_T1, i.e. the first signature tree public key, is formed as the root node of a signature tree described in Figure 4. That is, starting from the secret key chunks sk[i,j], the public keys are formed by successive hashing and concatenation as described with reference to Figure 4 until we reach a tree of height h. The height h can be specified by the manufacturer of the secure element 202 or the computing device 200. PubK_T2 is formed similarly as the result of successive concatenation and hashing starting from secret key chunks sk[i,j] and reaching a tree of height h. Signature tree public keys corresponding to subsequent signature trees are formed similarly.

Referring to Figure 1 and Figures 3 and 4, second signature tree T2 is generated immediately following on from the generation of T1 and as set out above, a second signature tree T2 is also generated and is formed similarly to T1. They are structured and generated in the way described above with specific reference to Figure 4.

The second signature tree public key (PubK_T2) is then signed using the current private key of T1, i.e. the one currently in use. In order to generate a signature on PubK_T2 (i.e. where PubK_T2 , that is, PubK_T2 is firstly separated into chunks, e.g by truncation to identify L equal sized sections of PubK_T2. In a simple example, if PubK_T2 was 213456798696 and L was equal to 3, the first data chunk may be 2134, the second data chunk may be 5679 and the third data chunk may be 8696. It should be emphasised that L = 3 is only an illustrative example. L can be any positive integer greater than 2. For example, L may be 67 or 133 or even higher.

Secondly, the next available secret key from T1 is identified. If this at the very start of the use of the signature generation structure T, it is likely the next available secret key will be wots_sk[0] which is separated into secret key chunks sk[0,0], sk[0,1] and sk[0,2 (i.e. L-1)]. If the next one needed to be used, i.e. because wots_sk[0] had been used already to generate a signature, then the chunks corresponding to wots_sk[1] would be used, i.e. sk[1,0] sk[1,1] and sk[1,2] (as L=3)

The generation of the corresponding public keys pk[i,j] is described above. Regarding the signatures, each secret key chunk is combined with the corresponding data chunk (i.e. the corresponding chunk of PubK_T2) to form the input which forms the basis of the determination of the signature chunk. For the first data chunk, i.e. 2134, the secret key chunk sk[0,0] is hashed 2134 times. For the second data chunk, i.e. 5679, the secret key chunk sk[0,1] is hashed 5679 times. For the third data chunk, the secret key chunk sk[0,2] is hashed 8696 times. The respective hashes of the secret key chunks (i.e. the 2134^{th}, 5679^{th} and 8696^{th} order hashes) can then be concatenated together and hashed to form a signature on the public key of the second signature tree PubK_T2. That is to say, the public key for the second signature tree is now signed. The signature can then be stored in storage local to the secure computing element 202.

As wots_sk[0] has been used at that point, it cannot be used again. The next available secret key will be wots_sk[1] which, in turn, will be separated into chunks to be used as the basis for signature generation (and subsequent attestation generation).

The significance of the immediate generation of T2 and the signature on the second signature tree public key will be described below in the context of an interruption event.

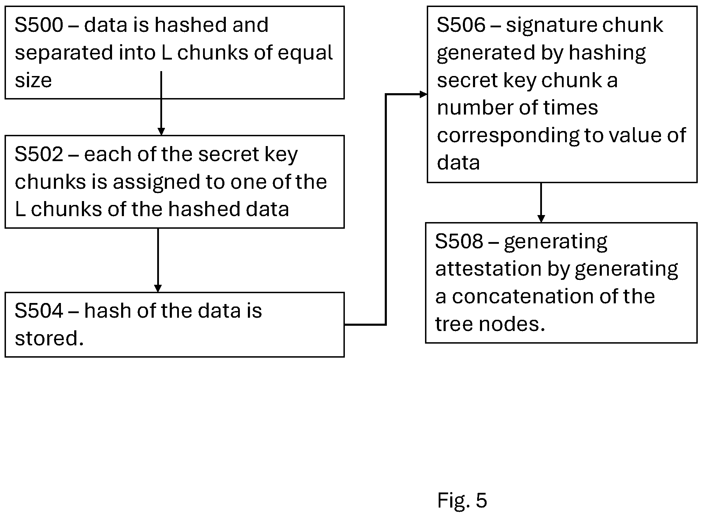

Referring back to the application of the signature generation structures to the generation of attestations over items of data, we now describe how an attestation over such an item of data is generated with reference to Figure 5. This would be in response to the request received in step S112.

In a step S500, the data is hashed (using, for example, one of SHA256, SHA256/192, SHAKE256/256, SHAKE256/192) and then separated into L (=len) chunks of equal size. That is to say, the data is hashed to generate a numerical representation of the data. The numerical representation is then separated into L chunks of equal size.

Optionally or additionally, it may be that not all of the data needs to form the basis of the attestation. In this instance, only a part of the data may be separated and hashed and the subsequent steps are applied only to the corresponding hash.

In the example above where PubK_T2 was signed, L was equal to 3 but as set out above, it can be any integer greater than 2 . The data item to be attested to may be truncated to extract the first T bytes prior to being hashed and separated into L chunks of data if it is deemed to be too large for the attestation to be computationally verifiable. Optionally or additionally, if the data item to be attested to is deemed too large (i.e. it exceeds a specified threshold in terms of size or number of alphanumeric characters), the hashing step may be that the data is hashed into a value which can be stored using T bytes prior to the subsequent operations.

The data item may correspond, for example, to third party public keys which are stored on the device, which can be very large numbers of the order between 10^20 and 10^30.

We will continue from the point where wots_sk[0] has been used and is therefore no longer available. We therefore use secret key wots_sk[1] as the basis for signature generation.

In a step S502, each of the secret key chunks corresponding to wots_sk[1], i.e. sk[1,0], sk[1,1], ... sk[1,L-1] etc is assigned to a corresponding chunk of the hash of the data (or a corresponding chunk of the hash of the truncated form of the data). In step S504, the hash of the data may be stored in storage local to the secure element 202. However, this is entirely optional and can be specified by the user of the computing device 200 or the manufacturer or user of the secure element 202.

In a step S506, the signature chunk is then generated by hashing the corresponding secret key chunk a number of times corresponding to to the chunk of the hash of the data. For example, if the chunk of the hash of the data is 12345, the corresponding secret key chunk is hashed 12345 times. This is implemented using a hashing algorithm such as, for example, one of SHA256, SHA256/192, SHAKE256/256 or SHAKE256/192.

Optionally, only part of the data may be subject of the attestation. If that is the case then only that part of the data will form the basis of the signature only chunks corresponding to that part of the data will be generated.

The respective hashes of the secret key chunks, i.e. those formed by successive hashing of the secret key chunks a number of times corresponding to the value of the chunk of the hash, correspond to the signature chunks which are then concatenated together and hashed to form an attestation. This may also be described as a concatenation of the corresponding nodes on the signature tree. This forms the attestation of the data.

This is step S508. Referring back to Figure1, in a step S118, the attestation of the data is provided to the requesting entity with the hash of the data which is subject of the attestation. The attestation of the data provided to the requesting entity comprises the attested to data and the concatenated signatures. The manufacturer of the device or implementer of the system of which device 200 is a part can choose to include additional data which may be relevant to a specific use case. For example, a checksum may be included in an attestation provided to the requesting entity. The checksum may relate to a specific value computed according to the SP 800-208 standard.

As can be seen above, each secret key can only be used once to form a signature. When all of the secret keys in a signature tree are used up, another signature tree, e.g. T2 is then required. As referenced above, when T2 is generated, its public key (PubK_T2) is signed with the current secret key of T1, i.e. the one formed by the next available secret key (wots_sk). That means that the first and subsequent attestations generated using a signature tree are generated using sk[1,0],...sk[1,L-1] onwards until sk[2^h-1,0]...sk[2^h-1, L-1] is used up. When sk[2^h-1,0]...sk[2^h-1,L-1] (from T1) is used up the signature generation which forms the basis for attestation (as described in Figure 5) is implemented using T2. Alternatively or optionally, if an interrupt event is determined, T2 is then used to generate attestations. This is described in more detail below.

The parameter h therefore provides a numerical limit on the number of messages which can be attested to using a signature tree such as T1 or T2. That is to say, including the signature on PubK_T2, a signature tree can only be used to attest data until the secret keys are used up, i.e. generate 2^h-1 attestations if one secret key is used to sign the public key of the next tree has been signed. This means that signature trees can be kept to a reasonable size which does not consume large amounts of computing resources during, for instance, signature generation of an attestation (described below). The parameter h can be specified by a manufacturer or a user of the computing device 200 or the secure element 202.

In the event of an interruption event (which may also be described as a tearing event) or when the maximum number of secret keys in T1 is used up, i.e. the maximum number of signatures has been generated, second signature tree T2 is then used to generate signatures which are used to form attestations in response to a request in accordance with step S112.

Example interruption events include loss of power or loss of data connection. Other example events could be message loss during communication with an external entity. Each of these events could be caused by, for example, a malicious actor looking to access the computing device 200 by looking to access secure content such as public keys and other secure content which may be used in the attestation process. For this reason, we aim to limit the use of private keys and especially in the event where hardware resources are limited and resources such as a protected hash accelerator are not available.

By enabling the secure element 202 to switch from T1 to T2 to generate signatures as part of an attestation process, it enables the secure element 202 to avoid re-use of the last secret key (or secret keys) which are used. In the absence of the switch from T1 to T2 (and the immediate generation of T2), if the signing process is interrupted by the interruption events one it would be possible to run out of signatures before being able to sign the public key of T2 using the secret key obtained from T1. This would compromise the trust relationship between external entities and the device where a trust relationship exists. That is to say, the signature generation process would be broken.

In signing PubK_T2 with a secret key from T1, this remedies this breaking of the signature generation mechanism.

PubK_T2 may be distinguished from other content which is signed with the same key a controlled tag length value structure or similar can be used to separate an arbitrary content block from a public key block.

If the signature procedure (using T1) is interrupted in a manner that at least part of the signature was lost, it cannot be restarted with the same private key. Therefore, the next private key (from T1) is used to restart the signature procedure used in the generation of an attestation.

When T2 is being used and a request for attestation is received, the process detailed in Figure 5 is used with secret keys (and secret key chunks) from T2 to generate the attestation.

That is to say, responsive to an interruption event, the attestation is generated using second signature tree T2 and not first signature tree T1.

On generation of second signature tree T2 as described above, a third signature tree T3 may be immediately generated and is structured similarly to the signature tree illustrated in Figure 4. That is to say, secret keys are generated using a random number generator and successive hashing and concatenation is used to establish a root node (public key) for the third signature tree T3 is generated. We enumerate this as PubK_T3. The public key for the third signature tree T3 is then signed with the current secret key from T2 and can be shared with the computing device 200 and may also be shared with the network entity 210. Subsequently, if an interruption event is then determined, T3 can then be used to generate attestations.

Again, the size of T2 and T3 is determined by parameter h, which limits the number of attestations which can be generated using any particular signature tree. The parameter h can be a small number, e.g. 2, 3, 4, 5, 6. It can also be a larger number, e.g. larger than 6. This means that we can implement small signature trees which are easier to store and which do not necessitate long verification paths, which become computationally demanding and, in some cases, infeasible.

In generating the signature generation structure illustrated in Figure 3 (recovery tree R and T'1 will be described later), we can implement smaller signature generation trees whilst providing long (virtually infinite) signatures. Figure 3 illustrates the signature generation structure where T1, for instance, endorses (by way of signature of the public key of T2) signature tree T2 and T2, in turn, endorses T3. This succession of signature generation structures also helps the secure element 202 avoid denial of service in the event of an interruption event. This also means that long signatures can be used whilst also maintaining signature trees of a reasonable, computationally feasible, size since new trees can be generated and endorsed at any time.

Subsequently, a fourth signature generation structure T4 may also be generated in a similar way when T3 is generated in order to continue the signature generation structure, further endorsing its resilience against interruption events.

In using secret keys only once to generate signatures on attestations of data, the secure element 202 and, by extension, the computing device 200, is hardened against side channel attacks. In the example of LMS-based signature generation, for instance, each secret key is used at most twice. This comprises the generation of public keys and during the signature generation process (whether that be to sign a public key of another tree or to generate an attestation). This is enforced by a usage counter which is stored in non-volatile memory (NVM) in the secure element 202 which is incremented when any specific secret key is used. When the usage counter is equal to 2, that secret key (for instance wots_sk[0]) is not used again and the next secret key (for instance wots_sk[1]) is then used and this continues until wots_sk[2^h-1] is used, which is when the signature generation process switches to the next signature tree, i.e. T1 switches to T2 whether there is an interruption event or not and subsequently T2 switches to T3 when the number of secret keys in T2 is used up according to the usage counter.

The use of one-time signature (OTS) public keys, i.e. those formed by the hashing and concatenation of secret key chunks in signature trees as described above, can be stored or cached to enable the authentication path to be computed. This will be described later. The storage of such public keys can be offloaded to external entities.

Additionally, in generating signatures in the way described, it is possible to interleave or interrupt the signature generation steps with other operations. As the signature generation is controlled using the parameter w, the signature length in Bytes can be kept to kilobytes. The signature is generally never stored on the device, although it can be. By not requiring storage on the computing device 200, the attestation can be provided in smaller chunks, i.e. the size of a single hash output.

Indeed, it may be desired to interleave the signature generation with other operations. This is because the time taken to generate the attestation could be of the order of tens of seconds or minutes. The latency caused by such an interruption is determined by the calculation of the hash chain used to generate the signature. This has the potential to increase the exposure to interruption events (or tearing events) but the features set out above enable the effects of such an interruption to be mitigated.

Optionally or additionally, the availability of signatures which can form the basis for attestation can also be generated using recovery tree R. This may enable secret keys to be obtained in the event that one or more complete public tree blocks (i.e. pk[0,0],pk[0,1],...,pk[0,L-1]) are permanently lost, thus preventing verification of an attestation signature, or would take too long to enable verification due to the number of public tree blocks involved in the authentication path.

As set out below, a public key can be associated with the recovery tree R (as a restore-tree public key) and this can be used during trust provisioning with external network entity 210.

The restore tree public key can be shared with the external world, either during an initial trust provisioning step or even during manufacturing, and it can be used to formulate the signature on a blockchain which enables the verification of attestation operations from the computing device 200.

In a step S600, when the first signature tree T1 is generated, a recovery tree R is also generated and it is structured similarly to T1, i.e. a layer of secret keys is randomly generated and can be successively hashed and concatenated to form the restore tree public key at the root of recovery tree R. Also, similar to T1, a parameter h is used to limit the number of signatures which can be generated by the recovery tree. The parameter h for the recovery tree R may be distinct from the parameter h used in the signature trees T1, T2, T3 and T4. The next available private key of T1 (e.g. wots_sk[1] formed by a combination of chunks sk[1,0],...,sk[1,L-1]) may be used to sign the restore tree public key using the same procedure described above when PubK_T2 is signed based on T1. The first available private key of T1, i.e. wots_sk[0] formed by a combination of chunks (and secret keys) sk[0,0],...,sk[0,L-1], would have been used to sign PubK_T2 on generation of T2.

The next available private key from R may be used to sign PubK_T1 when first signature tree T1 is generated (see above). This creates an authentication path between R and T1 (and successive signature trees such as T2, T3 etc).

In the event that one of more public keys from the active signature tree was not available, i.e. if any blocks of the public keys in T1 is permanently lost (i.e. secure element 202 fails to access to the necessary blocks to form the authentication path) or if the verification path would be too long, i.e. if the tree was of a size to make the authentication of the attestation computationally infeasible at the time of verification, the recovery tree R could be used to generate the signature which is used as the basis of the attestation (as follows). This is step S602.

On determination of the recovery event, a further signature tree T'1 is generated in a similar way to T1, i.e. secret key chunks sk[0,0],...,sk[0,L-1], ...., sk[2^h-1, 0],...sk[2^h-1, L-1] are generated and used as the basis, following successive hashing and concatenation (in accordance with what is set out in NIST SP 800-208) to form PubK_T'1 as the root of the signature tree T'1 (and the public key of signature tree T'1). The next available private key (i.e. the next available combination of secret keys e.g. sk[j,0], sk[j,1], ..., sk[j,L-1]) of recovery tree R is then used to sign PubK_T'1. The signature of PubK_T'1 is then shared with the computing device 200 in combination PubK_T'1. PubK_T'1 can then be shared with external entities such as network entity 210.

Signature tree T'1 is then used to generate the signatures used to form the attestation in response to an active request for attestation or the following request for attestation.

Whether there is already an active request for attestation, i.e. received prior to the recovery event, or a request received following the recovery event, the process of generating attestation follows the steps set out in Figure 5. Similarly, only chunks may be provided if only chunks of the data require attestation. This is step S604.

Signature tree T'1 is then used, similarly, until an interruption event occurs or the number of secret keys runs out (similarly based on the usage counter used to regulate usage of secret keys from T1, T2 etc).

On generation of T'1, a further signature tree (T'2) may similarly be generated and the public key (PubK_T'2) of the further signature tree can be signed using the next available secret key of T'1.

At the next recovery event, R is again used to generate a signature tree and steps S600 to S606 are repeated. The next available secret key from recovery tree R is then used to sign the public key of the newly generated signature tree. The signature is then shared with the computing device 200 with the newly generated signature tree public key. The newly generated signature tree public key can then be shared with external entities which have a trusted relationship with the computing device 200, e.g. network entity 210.

The recovery tree R can only be used to generate a finite number of further signature trees. That is to say, recovery tree R, whilst structured similarly to signature trees T1, T2 etc, may have a parameter h which is set lower than the equivalent parameter for T1, T2 so that it can only be used to sign a relatively low number of recovery trees.

The restore tree public key is shared with network entities external to the computing device 200 to establish a trusted relationship, for example, between the computing device and the network entity 210. This is implemented by obtaining the restore tree public key from the secure element 202. Optionally, the manufacturer of the device, or the manufacturer of the secure element, may generate the restore public key in the respective manufacturing phase and extend the trusted relationship to third parties by generating a certificate based on the restore public key.

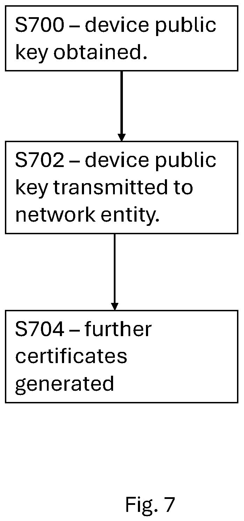

Prior to the start of the method 100, a trust provisioning procedure may be completed which generates an initial root of trust between computing device 200 and external network entities which may seek the attestation described above. This is described with reference to Figure 7.

In order to generate the root of trust between the computing device 200 and an external network entity 210, the computing device 200 obtains a device public key from secure element 202. This is step S700.

The device public key is then transmitted to the network entity 210. This is step S702.

The network entity may, additionally, use the device public key to sign certificates to extend the trusted relationship to other entities. This is step S704.

Steps S700 to S704 may be executed prior to step S100 (see Figure 1) and therefore prior to the establishment of signature tree T1. This enables a trust chain to be set up with the manufacturer of the device (or secure element) at the first end and signature tree T1 at the root end, with the device public key in between.

Following the establishment of signature tree T2, the signature tree T2 will added to the end of the trust chain, i.e. the trust chain will be device key ->T1->T2..

That is to say, prior to the establishment of signature trees, a trusted relationship may be established between the computing device 200 and a network entity 210. The trusted relationship may be established by the sharing of a public key. The network entity 210 may be the source of requests for attestations of data.

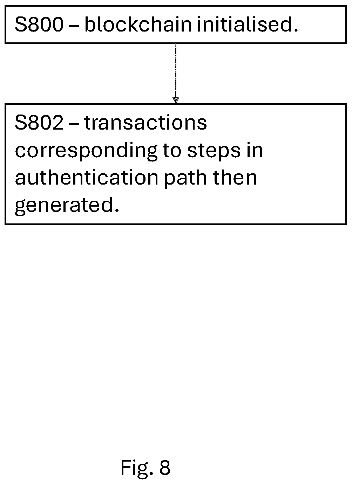

For each signature tree, a blockchain transaction may be initialised to enable verifications of attestations generated using a signature tree. This is described in Figure 8.

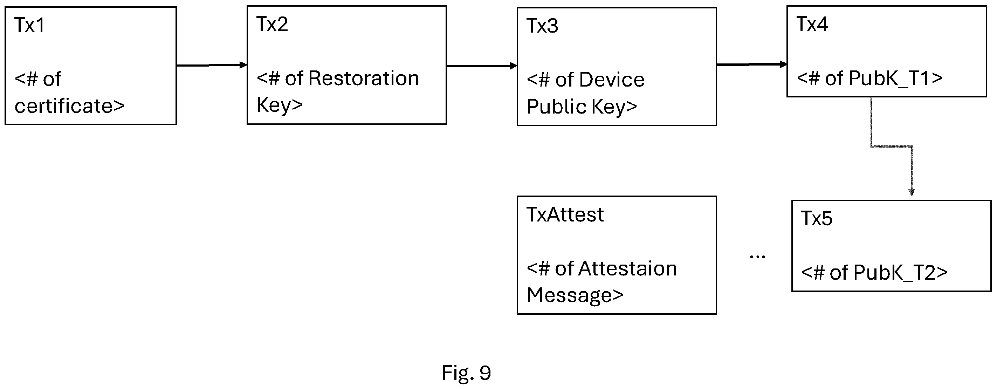

In a step S800, a master node of a blockchain network initialises a public blockchain and issues a request for a certificate from network entity. Other ledger structures may be used. The certificate contains a device identifier for computing device 200. This identifier is also included in any attestation request to the computing device from the network entity 210. The blockchain is illustrated in Figure 9. The device identifier may be a key provided by a manufacturer of the computing device 200.

The certificate is obtained and stored in a transaction (Tx1) on the blockchain. A subsequent transaction (Tx2) corresponding to the recovery tree can then be established which signs an output of the the certificate transaction (Tx1) with the public key of the recovery tree. A transaction (Tx3) which corresponds to the entire tree structure T, i.e. T1, T2, T3 etc may then be initialised, this may use the device public key to sign Tx2.

A subsequent transaction (Tx4) corresponding to first signature tree T1 can be initialised, which signs an output of Tx3 using PubK_T1. A subsequent transaction (Tx5) corresponding to second signature tree T2 can then be initialised which signs an output of Tx4 using PubK_T2. Subsequent transactions are then initialised as they are needed. Each transaction may comprise a hash of the corresponding public key. A transaction corresponding to the attestation may then be initialised and added to the end of the blockchain. This transaction signs an output of the most recent signature tree transaction or the signature tree which generates the signature which was used to generate the transaction. The transaction corresponding to the attestation then enables the attestation to be verified as each transaction comprises a hash of each public key and a timestamp for the transaction. This enables any verifier to verify the attestation using the trust chain which can be supported using the blockchain structure.

Each signature tree transaction may have a number of outputs equal to the number of signatures which can be generated using that signature tree.

In an unspent transaction output (UTXO) blockchain, the initialisation of the transaction may comprise hashing the certificate or the public key and including the hash as metadata in an unspendable output.

In a step S802, an attestation is received from network entity 210 and can be verified using the blockchain initialised in step S800. The attestation may also comprises an authentication path comprising hashes corresponding to nodes on the respective signature tree used to generate the attestation.

As each ach attestation is then included in a respective transaction. This forms a chain between the certificate obtained from the device and the attestations. This enables the sequence of attestations and the sequence of attestation trees, e.g., T1, T2, T3, ..., to be verified by the verifier.

The authentication path is illustrated in Figure 4. The corresponding hashes on the authentication path can be used to authenticate the attestation as they can be used to authenticate the hash values at each level on the corresponding signature tree. This is also shown in SP 800-208.

In summary, what is described is a secure attestation scheme based on hash-based signature generation which can address the challenges of devices which are limited in terms of computing power, working memory, code memory, event handling latency requirements, security requirements (i.e. resistance to side channel attacks and fault injection) and limited non-volatile memory.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method of providing an attestation of data on a device, the method comprising:
initialising a signature generation structure for generation of signatures, wherein initialising the signature generation structure comprises:
generating a first signature tree and immediately, responsive to the generation of the first signature tree, and generating a second signature tree;
generating a first signature tree public key;
signing the first signature tree public key with a signature generated using a private key associated with the device;
generating a second signature tree public key;;
signing the second signature tree public key with a private key generated using the first signature tree;
receiving a request for attestation of data on a device, wherein the request is received from a requesting entity;
obtaining the data to be attested to;
using the signature generation structure to generate a signature, wherein the signature is based on one of the first signature tree or the second signature tree;
wherein the first signature tree is selected to generate the signature prior to an interruption event and the second signature tree is selected to generate the signature responsive to the detection of an interruption event and
generating the attestation by signing the data with the selected signature; and
providing the attestation to the requesting entity.

2. A method according to Claim 1, wherein the second signature tree is immediately generated responsive to the generation of the first signature tree.

3. A method according to Claim 1 or Claim 2, wherein the device public key is shared with an external entity.

4. A method according to Claim 3, wherein the external entity is the requesting entity.

5. A method according to any preceding claim, wherein the first signature tree and the second signature tree are both restricted to the generation of a finite number of signatures.

6. A method according to Claim 5, wherein the number of signatures is based on a height parameter of the respective signature tree.

7. A method according to any preceding claim, wherein, after expiry of the first signature tree, the method further comprises:
generating a third signature tree
generating a third signature tree public key pair;
signing the third signature tree public key with a signature generated using the second signature tree;;
responsive to an attestation request received at the device, generating a signature for the attestation using the third signature tree.

8. A method according to any preceding claim, the method further comprises:
prior to the generation of the signature generation structure, initialising a recovery generation structure comprising a recovery generation tree comprising a plurality of recovery private keys:
determining the occurrence of a recovery event; and
based on the occurrence of the recovery event, using the recovery generation structure to:
generate a further signature tree and an associated public-private key pair;
signing the associated public key using a signature generated using a recovery private key obtained from the recovery generation tree.

9. A method according to Claim 8, wherein the recovery event comprises at least one of:
loss of data;
loss of data associated with a respective signature tree;
the estimated time of verification exceeding a verification threshold.

10. A method according to any preceding claim, wherein an interruption event comprises at least one of:
- loss of power to the device; or
- Interruption of device functionality.

11. A method according to any preceding claim, wherein a trust chain is initialised between respective signature trees and the attestation, wherein the trust chain is associated with a blockchain

12. A method according to any preceding claim, wherein the data to be attested to comprises at least one of:
- a device identifier;
- public and private keys;
- a serial number associated with the device;
- configuration data; and
- a hash value.

13. A method according to any preceding claim, wherein the attestation of the data comprises determining a hash of the data.

14. A computer-program product which, when executed on a processing medium, configures the processing medium to implement the steps of any one of Claims 1 to 13.

15. A non-transitory storage medium configured to store instructions which, when executed by suitably configured hardware, provides instructions to a processing medium to implement the steps of any one of Claims 1 to 13.
